# EUROPEAN PATENT SPECIFICATION

(11) **EP 1 027 378 B1**
(45) Date of publication and mention of the grant of the patent: **02.01.2004**
(21) Application number: 98956406.7
(22) Date of filing: 29.10.1998
(51) Int. Cl.: C08F 246/00, C08F 220/10

(54) **DURABLE, FILM-FORMING, WATER-DISPERSIVE POLYMERS**
HALTBARE, FILMFORMENDE, WASSERDISPERGIERBARE POLYMERE
POLYMERES DURABLES, FILMOGENES, DISPERSIBLES DANS L'EAU

(30) Priority: 31.10.1997 US 962496; 24.12.1997 US 998164; 21.07.1998 US 120046
(43) Date of publication of application: 16.08.2000
(73) Proprietor: Hewlett-Packard Company, A Delaware Corporation, Palo Alto, CA 94304 (US)
(72) Inventor: NGUYEN, Khe, C., Los Altos, CA 94024 (US); GANAPATHIAPPAN, Sivapackia, Mountain View, CA 94040 (US)
(74) Representative: James, Anthony Christopher W.P.
(86) International application number: PCT/US1998/023144
(87) International publication number: WO 1999/023126

(56) References cited:
- EP-A- 0 068 903
- EP-A- 0 796 901
- DE-A- 2 845 375
- US-A- 3 976 614
- US-A- 4 876 313
- US-A- 5 160 372
- US-A- 5 491 209
- PATENT ABSTRACTS OF JAPAN vol. 015, no. 392 (C-0873), 4 October 1991 & JP 03 160069 A (SEIKO EPSON CORP), 10 July 1991

## Description

### TECHNICAL FIELD

The present invention relates generally to core/shell and other polymers with hydrophobic and hydrophilic portions, which, when used by themselves or in combination with a surfactant, are useful for dispersing otherwise non-soluble materials, such as pigment and dyes, in a fluid medium, and upon drying, provide improved physical properties to the dried film. Specifically, improved ink-jet ink compositions are obtained.

### BACKGROUND ART

Core/shell polymers are well-known; such polymers typically have a hydrophilic portion and a hydrophobic portion comprising a latex particle morphology consisting of an inner "core", surrounded by an outer "shell". Core/shell polymers are commonly used to encapsulate hydrophobic molecules or particles, such as pigments, which are ordinarily not insoluble in water, but which, after association with polymers, form stable dispersions in water. Dispersion occurs when the hydrophobic portion of the polymer associates with the water-insoluble molecule or particle, and the hydrophilic portion of the polymer disperses with water.

U.S. Patent 4,597,794 discloses the dispersion of pigments in an aqueous vehicle, using aqueous binders comprising both hydrophilic and hydrophobic components. The dispersion of the pigment is followed by centrifugation to eliminate the non-dispersed components such as agglomerates. Examples of the hydrophilic component comprise polymers of monomers having a mainly additively polymerizable vinyl group, into which hydrophilic construction portions such as carboxylic acid groups, sulfonic acid groups, sulfate groups, etc. are introduced by using a predetermined amount of an α,β-unsaturated monomer such as acrylic acid, methacrylic acid, crotonic acid, itaconic acid, itaconic acid monoester, maleic acid, maleic acid monoester, fumaric acid, fumaric acid monoester, vinyl sulfonic acid, sulfoethyl methacrylate, sulfopropyl methacrylate, sulfonated vinylnaphthalene, etc. Examples of the hydrophobic portion comprise polymers of monomers selected from the group consisting of styrene, styrene derivatives, vinylnaphthalene, vinylnaphthalene derivatives, and α,β-ethylenic unsaturated carboxylate of aliphatic alcohol having C₉-C₁₈. In addition to the foregoing monomers, also included are acrylonitrile, vinylidene chloride, α,β-ethylenic unsaturated carboxylate, vinyl acetate, vinyl chloride, acrylamide, methacrylamide, hydroxyethyl methacrylate, hydroxypropyl methacrylate, glycidyl methacrylate, N-methylol acrylamide, N-butoxymethyl acrylamide, etc.

U.S. Patent 5,082,757 discloses encapsulated toner compositions comprising a core and a hydroxylated polyurethane microcapsule shell derived from the polycondensation of a polyisocyanate and a water soluble carbohydrate. The core comprises a polymer binder, pigment, dye, or mixtures thereof. Examples of the polymer binder include polymerized monomers selected from the group consisting of acrylates, methacrylates, and olefins including styrene and its derivatives.

U.S. Patent 5,461,125 discloses waterborne core-shell latex polymers useful as adhesive films, rather than super-dispersion stability. The core comprises a (co)polymer comprising a (meth)acrylate ester, while the shell comprises a copolymer, the copolymer comprising (1) a nitrogen-bearing ethylenically-unsaturated free-radically polymerizable monomer, (2) at least one (meth)acrylate ester of about a C₁ to C₁₄ alcohol, and (3) an optional ethylenically-unsaturated free-radically polymerizable silane monomer, wherein the nitrogen-bearing ethylenically-unsaturated free-radically polymerizable monomer comprises about 15 to 60 wt% of the shell and wherein the core comprises about 40 to 85 wt% of the weight of the total core-shell latex particle. The polymers obtained by practicing the teachings of the disclosure have molecular weights of 400,000 or more, and the total low T_{g} component (less than -10°C), where T_{g} is the glass transition temperature, is greater than 60 wt%.

U.S. Patent 5,656,071 discloses ink compositions useful for ink-jet applications. These compositions include an insoluble pigment and a polymeric dispersant. In one embodiment, the polymeric dispersant comprises block or graft copolymers comprising a hydrophilic polymeric segment (particularly an acrylate or methacrylate copolymer) and a hydrophobic polymeric segment which includes a hydrolytically stable siloxy substituent.

US-A-5160372 describes ink formulations for ink-jet printers. The formulations may contain polymeric dispersants based on AB or BAB block copolymers, wherein the A segment is a hydrophobic acrylate and the B segment is a second polyacrylate.

EP-A-0796901 describes ink-jet printing inks having a polymer dispersed therein, wherein the polymer is a core-shell block copolymer comprising a shell polymer having a glass transition point in the range 50°C to 150°C, and a core polymer having a glass transition point in the range of -100°C to 40°C.

DE-A-2845375 describes ink-jet printing ink compositions containing finely divided particles of polymer, wherein the polymer is a polyacrylate block copolymer.

Heretofore, ink-jet printers have not had printing performance and durable print properties of competitive printer technologies. The foregoing cited patents do not provide for useful, durable film-forming properties upon removal of the water or solvent. Film durability includes wet and dry rub resistance, highlighter smearfastness, lightfastness and waterfastness (e.g. hot and cold water, under spill, soak and rub conditions).

In particular, formulating an ink-jet ink often involves compromising competing interests. For example, it is possible to enhance one property, such as durable film-forming of the colorant. However, such enhancement usually results in the degradation of another property, such as printing stability associated in thermal ink-jet with resistor fouling or nozzle clogging (kogation or decap - nozzle crusting).

Thus, there is a need to provide an improved polymer exhibiting both good dispersibility in water and durable film-forming properties upon drying. Such polymers are useful in water-based protective coatings, dispersing otherwise non-soluble molecules or aggregates thereof, including pigments and dyes, useful in ink-jet applications.

### DISCLOSURE OF INVENTION

The present invention provides a durable film-forming, water-dispersive polymer having a hydrophobic portion and a hydrophilic portion for dispersing water-insoluble molecules or particles in water, wherein the polymer is selected from the group listed in claim 1.

These polymers provide the combined functionalities of stable water dispersibility over a wide range of operating temperatures and durable film formation at ambient conditions upon drying. Specifically, the polymers function under a wide range of temperatures and ink chemistries typical of thermal ink-jet inks. Furthermore, the polymers provide for dispersing the otherwise non-water-dispersible components, such as colorants, including pigments and dyes.

The polymers according to the present invention as defined in claim 1 incorporate the following moieties:

[(A)ₘ(B)ₙ(C)ₚ(D)_{q}]ₓ (1)

wherein A, B, C, and D represent functionalities as follows:
A = at least one hydrophobic component contributing to improved durable, film-forming properties selected from moieties which, when homopolymerized to a solid state, have a glass transition temperature (T_{g}) in the range -150°C to +25°C;
B = at least one hydrophobic and solvent barrier moiety used to adjust the T_{g} of the hydrophobic component of the polymer (I) which, when homopolymerized to a solid state, has a T_{g} greater than +25°C;
C = at least one hydrophilic component, which is a polyethylene glycol; and
D = at least one UV absorber (optional);
where m+n+p+q = 100 wt%.

The polymers of the present invention are useful in dispersing a wide variety of otherwise water-insoluble molecules or particles, such as (1) pigments used in printing on various media, including paper, plastic, and cloth and (2) magnetic particles, including those used in printing information on checks. Alternatively, the polymer system(s) are useful as a simple overcoating.

In all instances, the moiety having the low T_{g} confers a film-forming capability to the polymer. The film, after drying, is not capable of being reconstituted by water.

The polymers of the invention are prepared by conventional free-radical polymerization in water.

In the following description, all concentrations are given in terms of weight percent (wt%), unless otherwise specified. All values of molecular weight of polymers are given in terms of weight average.

Typically, the polymer(s) of the present invention is prepared by emulsifying the monomeric components, and then conducting a free-radical polymerization in water. Free-radical polymerization involves employing a free-radical initiator. A concentration of about 0.001 to 10 wt% of the initiator is employed in the total monomer system. Examples of suitable tree-radical initiators include, but are not limited to, ammonium persulfate, potassium persulfate, hydrogen peroxide, benzoyl peroxide, azobisisobutyronitrile, TRIGONOX® 21, and PERKADOX® 16. Preferably, the resulting polymer (I) is a random polymer.

One skilled in this art would understand that the polymer(s) can also be prepared by conventional condensation techniques. Once a film is formed from the polymer and water is removed, as by dehydration under ambient conditions, the film is essentially impervious to water, and the polymer is not capable of being redispersed with water. If the polymer or polymer/surfactant system is associated with pigment particles, and the pigment with polymer or polymer/surfactant system is deposited on a surface, such as paper, then the pigment particles are trapped within or beneath the film on the surface, and are thus protected from the effects of water and environmental solvents.

The following polymers fall within the scope of the present invention:
(1) (hexyl acrylate)₄₀ (methyl methacrylate)₄₀ (poly(ethylene glycol) methyl ether acrylate, mw = 404)_{20;}
(2) (hexyl acrylate)₃₀ (methyl methacrylate)₅₀(poly(ethylene glycol) methyl ether acrylate, mw=404)₂₀
(3) (hexyl acrylate)₂₀ (methyl methacrylate)₆₀ (poly(ethylene glycol) methyl ether acrylate, mw=404)₂₀
(4) (hexyl acrylate)₄₀(methyL methacrylate)₄₀ (poly(ethylene glycol) methyl ether acrylate, mw=2054)₂₀
(5) (hexyl acrylate)₃₀ (methyl methacrylate)₅₀ (poly(ethylene glycol) methyl ether acrylate, mw=2054)₂₀
(6) (hexyl acrylate)₂₀ (methyl methacrylate)₆₀ (poly(ethylene glycol) methyl ether acrylate, mw=2054)₂₀
(7) (hexyl acrylate)₄₀ (methyl methacrylate)₄₀ (poly(ethylene glycol) methyl ether acrylate, mw=218)₂₀
(8) (hexyl acrylate)₃₀ (methyl methacrylate)₅₀ (poly(ethylene glycol) methyl ether acrylate, mw=218)₂₀
(9) (hexyl acrylate)₂₀ (methyl methacrylate)₆₀ (poly(ethylene glycol) methyl ether acrylate, mw=218)₂₀
(10) (ethyl acrylate)₄₀ (methyl methacrylate)₄₀ (poly(ethylene glycol) methyl ether acrylate, mw=404)₂₀
(11) (propyl acrylate)₄₀ (methyl methacrylate)₄₀ (poly(ethylene glycol) methyl ether acrylate, mw=404)₂₀
(12) (butyl acrylate)₄₀ (methyl methacrylate)₄₀ (poly(ethylene glycol) methyl ether acrylate, mw=404)₂₀
(13) (octadecyl acrylate)₄₀ (methyl methacrylate)₄₀ (poly(ethylene glycol) methyl ether acrylate, mw=404)₂₀
(14) (lauryl methacrylate)₄₀ (methyl methacrylate)₄₀ (poly(ethylene glycol) methyl ether acrylate, mw=404)₂₀
(15) (octadecyl methacrylate)₄₀ (methyl methacrylate)₄₀ (poly(ethylene glycol) methyl ether acrylate, mw=404)₂₀
(16) (hydroxyoctadecyl acrylate)₄₀ (methyl methacrylate)₄₀ (poly(ethylene glycol) methyl ether acrylate, mw=404)₂₀
(17) (hydroxyethyl-acrylate)₄₀ (methyl methacrylate)₄₀ (poly(ethylene glycol) methyl ether acrylate, mw=404)₂₀
(18) (hydroxylauryl methacrylate)₄₀ (methyl methacrylate)₄₀ (poly(ethylene glycol) methyl ether acrylate, mw=404)₂₀
(19) (phenethyl acrylate)₄₀ (methyl methacrylate)₄₀ (poly(ethylene glycol) methyl ether acrylate, mw=404)₂₀
(20) (6-phenylhexyl acrylate)₄₀ (methyl methacrylate)₄₀ (poly(ethylene glycol) methyl ether acrylate, mw=404)₂₀
(21) (cyclohexyl acrylate)₄₀ (methyl methacrylate)₄₀ (poly(ethylene glycol) methyl ether acrylate, mw=404)₂₀
(22) (acryloxypropylmethyldimethoxysilane)₃₀ (methyl methacrylate)₅₀ (poly(ethylene glycol) methyl ether acrylate, mw=404)₂₀
(23) (N,N-dihexyl acrylamide)₂₀ (methyl methacrylate)₆₀ (poly(ethylene glycol) methyl ether acrylate, mw=404)₂₀
(24) (aminopropyl acrylate)₄₀ (methyl methacrylate)₄₀ (poly(ethylene glycol) methyl ether acrylate, mw=2054)₂₀
(25) (aminohexyl acrylate)₃₀ (methyl methacrylate)₅₀ (poly(ethylene glycol) methyl ether acrylate, mw=2054)₂₀
(26) (aminolauryl methacrylate)₂₀ (methyl methacrylate)₆₀ (poly(ethylene glycol) methyl ether acrylate, mw=2054)₂₀
(27) (N,N-dimethylaminoethyl acrylate)₄₀ (methyl methacrylate)₄₀ (poly(ethylene glycol) methyl ether acrylate, mw=218)₂₀
(28) (vinyl acetate)₃₀ (methyl methacrylate)₅₀ (poly(ethylene glycol) methyl ether acrylate, mw=218)₂₀
(29) (vinyl butyl ether)₂₀ (methyl methacrylate)₆₀ (poly(ethylene glycol) methyl ether acrylate, mw=218)₂₀
(30) (hexyl acrylate)₄₀ (styrene)₄₀ (poly(ethylene glycol) methyl ether acrytate, mw=404)₂₀
(31) (hexyl acrylate)₁₀ (dimethyl styrene)₅₀ (poly(ethylene glycol) methyl ether acrylate, mw=404)₂₀
(32) (hexyl acrylate)₂₀ (trifluoromethyl styrene)₆₀ (poly(ethylene glycol) methyl ether acrylate, mw=404)₂₀
(33) (hexyl acrylate)₄₀ (tetrafluoropropyl methacrylate)₄₀ (poly(ethylene glycol) methyl ether acrylate, mw=2054)₂₀
(34) (hexyl acrylate)₃₀ (glycidyl methacrylate)₅₀ (poly(ethylene glycol) methyl ether acrylate, mw=2054)₂₀
(35) (hexyl acrylate)₂₀ (glycidyl acrylate)₆₀ (poly(ethylene glycol) methyl ether acrylate, mw=2054)₂₀
(36) (hexyl acrylate)₄₀ (maleimide)₄₀ (poly(ethylene glycol) methyl ether acrylate, mw=218)₂₀
(37) (hexyl acrylate)₅₀ (n-hexyl maleimide)₃₀ (poly(ethylene glycol) methyl ether acrylate, mw=218)₂₀
(38) (hexyl acrylate)₄₀ (n-vinyl maleimide)₄₀ (poly(ethylene glycol) methyl ether acrylate, mw=218)₂₀
(39) (hexyl acrylate)₄₀ (methyl methacrylate)₃₀(d1)₁₀ (poly(ethylene glycol) methyl ether acrylate, mw=404)₂₀
(40) (hexyl acrylate)₄₀ (methyl methacrylate)₃₀(d1)₁₀ (poly(ethylene glycol) methyl ether acrylate, mw=404)₂₀;
(41) (hexyl acrylate)₄₀ (methyl methacrylate)₃₀(d1)₁₀ (poly(ethylene glycol) methyl ether acrylate, mw=404)₂₀;
(42) (hexyl acrylate)₄₀ (methyl methacrylate)₃₀(d1)₁₀ (poly(ethylene glycol) methyl ether acrylate, mw=404)₂₀;
(43) (hexyl acrylate)₄₀ (methyl methacrylate)₃₀(d4)₁₀ (poly(ethylene glycol) methyl ether acrylate, mw=404)₂₀, where, referring to the D moiety, R¹ = H, R²= O, and R³ = D4
(44) (hexyl acrylate)₄₀ (methyl methacrylate)₃₀(d4)₁₀ (poly(ethylene glycol) methyl ether acrylate, mw=404)₂₀, where, referring to the D moiety, R¹ = H, R²= O, and R³ = D4
(45) (hexyl acrylate)₄₀ (styrene)₃₀(d1)₁₀ (poly(ethylene glycol) methyl ether acrylate, mw=404)₂₀, where, referring to the D moiety, R¹ = H, R² = O, and R³ = D1
(46) (hexyl acrylate)so (methyl methacrylate)₄₅ (poly(ethylene glycol) methyl ether acrylate, mw=404)₅
(47) (hexyl acrylate)₅₀ (methyl methacrylate)₄₀ (poly(ethylene glycol) methyl ether acrylate, mw=404)₁₀
(48) (hexyl acrylate)₅₀ (methyl methacrylate)₃₅ (poly(ethylene glycol) methyl ether acrylate, mw=404)₁₅

The foregoing polymers are useful in encapsulating or forming a film or matrix with or covering or surrounding pigments or dyes and rendering them soluble or dispersible in water.

### EXAMPLES

In the following examples, most of the monomers used were commercially available. The purity of such monomers is that found in normal commercial practice. Only the poly(ethylene glycol) methyl ether acrylate monomers of different molecular weights were prepared from the corresponding alcohol with acryloyl chloride in the presence of triethylamine by standard esterification process. Other monomers can be prepared by following conventional and well-known procedures of typical organic reactions.

### Example 1 (reference example). (Hexyl Acrylate)₁₀ (Methyl Methacrylate)₃₀ (Vinylpyrrolidone)₅₉ (D1)₁.

### Synthesis of polymer with hexyl acrylate (A), methyl methacrylate (MMA) (B), vinylpyrrolidone (C), and UV stabilizer (D1) (D) in the ratio of 10, 30, 59, and 1% by weight, respectively:

Hexyl acrylate (8 g), MMA (24 g), vinylpyrrolidone (47.2 g) and UV stabilizer D1(0.8 g) were mixed with BRIJ 92 (0.8 g), SOLSPERSE 27,000 (0.82 g), and isooctylmercaptopropionate (0.8 g) in water (12 g) to form an emulsion. The emulsion was saturated with nitrogen. Then the emulsion was added over a period of 1 hour to a solution of potassium persulfate (1.71 g) in water (703.09 g) at 80°C. The reaction mixture was maintained at 80°C for 2.5 hour. The reaction mixture was then cooled to obtain the title polymer dispersed in water. The average particle size of the polymer solution was found to be 250 nm and the glass transition temperatures (T_{g}) of the polymer obtained were -10°C and 65°C.

### Example 2 (reference example). (Hexyl Acrylate)₃₀ (Methyl Methacrylate)₄₀ (Acrylamide)₃₀.

### Synthesis of polymer derived from hexyl acrylate (A), MMA (B), and acrylamide (E) in the ratio of 30, 40, and 30% by weight, respectively:

The monomers, hexyl acrylate (3 g), MMA (4 g), and acrylamide (3 g) were mixed in water (7 g) containing BRIJ 92 (0.22 g), Aerosol DPOS 45 (0.22 g), and isooctylmercaptopropionate (0.22 g) to form an emulsion. The emulsion was saturated with nitrogen and added dropwise to a solution of potassium persulfate (0.2 g) in water (82.14 g) at 100°C. Heating was continued for a period of 4 hours and cooled to obtain the title polymer. The average particle size of the polymer solution was found to be 200 nm and the glass transition temperatures (T_{g}) of the polymer obtained were -10°C and 125°C.

### Example 3 (reference example) (Lauryl Methacrylate)₁₀ (Methyl Methacrylate)₂₀ (Vinylpyrrolidone)₆₆ (D1)₁ (Sodium Styrene Sulfonate)₃.

### Synthesis of polymer derived from lauryl methacrylate (A), MMA (B), vinylpyrrolidone (C), UV stabilizer (D1) (D), and sodium styrene sulfonate (E) in the ratio of 10, 20, 67, 1, and 3% by weight, respectively:

The monomers, lauryl methacrylate (8 g), MMA (16 g), vinylpyrrolidone (52.8 g), UV stabilizer (D1) (0.8 g), and a solution of sodium styrene sulfonate (2.4 g) in water (15 g) were mixed. To this mixture were added BRIJ 92 (0.81 g) and SOLSPERSE 27,000 (0.81 g). The chain transfer agent isooctyl-3-mercaptopro-pionate (0.82 g) was subsequently added. The mixture was shaken vigorously for 3 min, followed by sonication for 3 min to form an emulsion. The emulsion was saturated with nitrogen for 0.5 hr. Meanwhile, a solution of potassium persulfate (1.71 g) in water (700.85 g) was prepared in a three-necked 500 ml round bottom flask and saturated with nitrogen. The persulfate solution was heated to 75°C. The emulsion was added dropwise from an addition funnel to the aqueous persulfate solution over a period of 1 hr. The reaction temperature was maintained at the elevated temperature for 3.5 hr. The solution was then cooled to room temperature to obtain the polymer in water with a concentration of 10% by weight. The average particle size of the polymer solution was found to be 170 nm and the glass transition temperature (T_{g}) of the polymer obtained was 50°C.

### Examples 4-6.

In the above Examples 1 to 3, the water-soluble components, such as vinylpyrrolidone (C), were replaced by poly(ethylene glycol) methyl ether acrylate (C) of molecular weight 404 (PEG-Ac(404)) in the corresponding amount to obtain polymer containing PEG-Ac(404). The resulting polymers and their average particle sizes and glass transition temperatures are given in Table I below.

**TABLE I.**

| Results of Examples 4-6. | | |
|---|---|---|
| Polymer | Particle Size, nm | T_{g}, °C |
| (hexyl acrylate)₁₀ (methyl methacrylate)₃₀ (PEG-Ac(404))₅₉ (d1)₁ - Ex. 4 | 150 | -10 and 65 |
| (hexyl acrylate)₃₀ (methyl methacrylate)₄₀ (PEG-Ac(404))₃₀ - Ex. 5 | 180 | -10 |
| (lauryl methacrylate)₁₀ (methyl methacrylate)₂₀ (PEG-Ac(404))₆₇ (d1)₁ (sodium styrene sulfonate)3-Ex.6 | 150 | -10 |

### Example 7 (reference example) (Butyl Acrylate)₂₀ (Methyl Methacrylate)₈₀ / Surfactant (2 wt%). Synthesis of polymer derived from butyl acrylate (A) and MMA (B) in the ratio of 20 and 80% by weight, respectively:

Butyl acrylate (4 g) and methyl methacrylate (16 g) were mixed with BRIJ 92 (0.2 g), SOLSPERSE 27,000 (0.2 g), and isooctylmercaptopropionate (0.2 g). An emulsion was prepared by adding water (2.0 g) to the above monomer mixture. The emulsion was saturated with nitrogen and added dropwise to a solution of potassium persulfate (0.4 g) in water (177 g) at 75°C. The reaction mixture was maintained at the same temperature for another 2 hr to obtain the title polymer/surfactant system dispersed in water. The average particle size of the polymer solution was found to be 165 nm and the glass transition temperature (T_{g}) of the polymer obtained was 63°C.

### Examples 8-11: Comparison Examples 1-2.

Testing of the physical properties of several durable, film-forming, water-dispersive polymers was performed and compared to prior art polymers. The tests involved a film-forming test, a water-dispersive stability test, and a measurement of the glass transition temperature, T_{g}.

### (1) Film Forming Test.

The polymer of the invention was cast on a glass substrate and allowed to dry at ambient conditions for several hours. As the film-forming process occured, the milky color of the polymer solution gradually turned into a transparent film.

The formed film (on glass substrate) was soaked in water mixed with different solvents liquid additives (40% versus water) for 24 hrs and the weight loss was measured. The samples with the least weight loss samples are indicative of the most durable film.

### (2) Water-Dispersive Stability Test.

The polymer emulsion was subjected to a centrifugation set at 4,000 rpm for 30 minutes. This is repeated twice. The amount of accumulation after centrifugation is an indication of the dispersion stability, with a higher amount of accumulation indicating less dispersion stability.

### (3) Measurement of T_{g}.

The glass transition temperature was measured by Differential Scanning Calorimetry, using a DSC available from duPont de Nemours Company as Model 2.0.

The data accumulated from the foregoing tests are illustrated in the following Table II:

**TABLE I.**

| Results of Tests. | | | |
|---|---|---|---|
| Polymer | Solvent additives/ Weight loss (%) | Centrifugation Accumulation | T_{g} (°C) |
| (HA)₄₀ (MMA)₄₀(PEGAc(404))₂₀ -Ex. 8 | Ethyl acetate, 0.05% | <0.5% | -10 |
| (octadecyl acrylate)₄₀ (methyl methacrylate)₄₀ (poly(ethylene glycol) methyl ether acrylate, mw=404)₂₀ - Ex. 9 | Ethyl acetate, 0.05% | <0.1% | -10 |
| (hexyl acrylate)₄₀ (maleimide)₄₀ (poly(ethylene glycol) methyl ether acrylate, mw=404)₂₀ - Ex. 10 | Ethyl acetate 0% | <0.01% | 60 |
| Comparison Example 1: (Styrene)₄₀ (Acrylic Acid)₆₀ | Ethyl acetate 80% | 30% | 100 |
| Comparison Example 2: Acrylic acid polymer | 100% | Soluble | 106 |

### Example 11: Comparison Examples 3-4.

Commercially available Cabot pigment plus polymer plus penetrating humectant plusö non-penetrating humectant:

### Example 11.

In an 250 cm³ glass jar were added 5.0 g of carbon black (Vulcan XR-72), 25.0 g of a polymer of the invention comprising (HA)₃₀(MMA)₄₀(PEGAc(404))₃₀ (10 wt% solid), 10 g diethylene glycol (as non-penetrating humectant), 10 g N-methyl pyrrolidone (NMP, as penetrating humectant), 0.02 g of fluoro surfactant (Fluorad 99; 3M Products). The components were milled together by a paint shaker using 2 mm zirconium beads for 2 hrs. After being milled, the system was diluted with water to achieve a final ink solution of 5 wt% solid. The Zr beads were removed by 200 mesh filtering. The ink solution was centrifuged to eliminate agglomerated solids and the like and refiltered again through a 5 µm glass filter. This solution was then ready for print testing.

In order to perform the print test, the ink was filled into the black ink cartridge of a Hewlett-Packard Company DeskJet printer prototype product and printed with a frequency of 20 kHz.

The optical density (OD) of the print was measured by Mac Beth densitometer.

The decap characteristic of the pen was characterized as the number of the streak lines appearing at the right hand sited of a black solid band. As the pen prints right -to-left in the printer, this is an indication of the startup performance of the pen - how long it takes the dried nozzles to come back to full nozzle health.

The stability of the ink was judged by measuring the changing of the particle size after the temperature cycle (T-cycle) between 70°C and -40°C.

The particle size measurement is carried out by a Nikon particle sizer.

Kogation is a phenomenon in which the pen cannot perform due to the deterioration of the surface of the firing resistor in the ink chamber due to a buildup of residue. Kogation generally terminates the life of the pen. Kogation was measured by number of prints exhibiting unchanged print quality (PQ) during continuous printing process of 100 pages. The higher the number, the lower the kogation effect.

The waterfastness and smearfastness were measure by dripping water across a printed area or smearing the area with a highlighter, and then measuring the optical density (in mOD) of the transferred ink.

### Comparison Example 3.

Example 11 was repeated, except the polymer was replaced by poly(ethylene glycol) having molecular weight in the range of 5,000.

### Comparison Example 4.

Example 11 was repeated, except the polymer was replaced by 98% hydrolyzed polyvinyl alcohol, average molecular weight = 4,000.

The print tests results for Examples 11 and Comparison Examples 3 and 4 are summarized in Table III.

**TABLE III.**

| Results of Example 11 and Comparison Examples 3-4. | | | | | | |
|---|---|---|---|---|---|---|
| Example | Optical density (OD) | Decap (lines/cm) | Particle size change after T-cycle | # of prints before kogation | Smear fastness (mOD) | Water fastness (mOD) |
| 11 | 1.45 | 1.0 | +/-3nm | 100 | 35 | 0 |
| Comp. 3 | 1.40 | 1.0 | +/-3nm | 100 | 600 | 400 |
| Comp. 4 | 1.45 | 3.0 | +/-5nm | 40 | 600 | 420 |

The results show the superiority of an ink containing the polymer of the invention as compared to inks that do not contain the polymer of the invention. Specifically, kogation is reduced and smearfastness and waterfastness are considerably improved.

Thus, there has been disclosed a durable, film-forming, water-dispersive polymer having at least one hydrophobic portion and either a hydrophilic portion or a surfactant associated with the polymer for dispersing molecules or particles in water.

## Claims

1. A durable.film-forming, water-dispersive polymer having a hydrophobic portion and a hydrophilic portion for dispersing water-insoluble molecules or particles in water, said polymer being selected from the group
consisting of (hexyl acrylate)₄₀ (methyl methacrylate)₄₀ (poly(ethylene glycol) methyl ether acrylate, mw=404)₂₀; (hexyl acrylate)₃₀ (methyl methacrylate)₅₀ (poly(ethylene glycol) methyl ether acrylate, mw=404)₂₀; (hexyl acrylate)₂₀ (methyl methacrylate)₆₀ (poly(ethylene glycol) methyl ether acrylate, mw=404)₂₀; (hexyl acrylate)₄₀ (methyl methacrylate)₄₀ (poly(ethylene glycol) methyl ether acrylate, mw=2054)₂₀; (hexyl acrylate)₃₀ (methyl methacrylate)₅₀ (poly(ethylene glycol) methyl ether acrylate, mw=2054)₂₀; (hexyl acrylate)₂₀ (methyl methacrylate)₆₀ (poly(ethylene glycol) methyl ether acrylate, mw=2054)₂₀; (hexyl acrylate)₄₀ (methyl methacrylate)₄₀ (poly(ethylene glycol) methyl ether acrylate, mw=218)₂₀; (hexyl acrylate)₃₀ (methyl methacrylate)₅₀ (poly(ethylene glycol) methyl ether acrylate, mw=218)₂₀; (hexyl acrylate)₂₀ (methyl methacrylate)₆₀ (poly(ethylene glycol) methyl ether acrylate, mw=218)₂₀; (ethyl acrylate)₄₀ (methyl methacrylate)₄₀ (polyethylene glycol) methyl ether acrylate, mw=404)₂₀; (propyl acrylate)₄₀ (methyl methacrylate)₄₀ (poly(ethylene glycol) methyl ether acrylate, mw=404)₂₀; (butyl acrylate)₄₀ (methyl methacrylate)₄₀ (poly(ethylene glycol) methyl ether acrylate, mw=404)₂₀; (octadecyl acrylate)₄₀ (methyl methacrylate)₄₀ (poly(ethylene glycol) methyl ether acrylate, mw=404)₂₀; (lauryl methacrylate)₄₀ (methyl methacrylate)₄₀ (poly(ethylene glycol) methyl ether acrylate, mw=404)₂₀; (octadecyl methacrylate)₄₀ (methyl methacrylate)₄₀ (poly(ethylene glycol) methyl ether acrylate, mw=404)₂₀; (hydroxyoctadecyl acrylate)₄₀ (methyl methacrylate)₄₀ (poly(ethylene glycol) methyl ether acrylate, mw=404)₂₀; (hydroxyethyl acrylate)₄₀ (methyl methacrylate)₄₀ (poly(ethylene glycol) methyl ether acrylate, mw=404)₂₀; (hydroxylauryl methacrylate)₄₀ (methyl methacrylate)₄₀ (poly(ethylene glycol) methyl ether acrylate, mw=404)₂₀; (phenethyl acrylate)₄₀ (methyl methacrylate)₄₀ (poly(ethylene glycol) methyl ether acrylate, mw=404)₂₀; (6-phenylhexyl acrylate)₄₀ (methyl methacrylate)₄₀ (poly(ethylene glycol) methyl ether acrylate, mw=404)₂₀; (cyclohexyl acrylate)₄₀ (methyl methacrylate)₄₀ (poly(ethylene glycol) methyl ether acrylate, mw=404)₂₀; (acryloxypropylmethyldimethoxysilane)₃₀ (methyl methacrylate)₅₀ (poly(ethylene glycol) methyl ether acrylate, mw=404)₂₀; (N,N-dihexyl acrylamide)₂₀ (methyl methacrylate)₆₀ (poly(ethylene glycol) methyl ether acrylate, mw=404)₂₀; (aminopropyl acrylate)₄₀ (methyl methacrylate)₄₀ (poly(ethylene glycol) methyl ether acrylate, mw=2054)₂₀; (aminohexyl acrylate)₃₀ (methyl methacrylate)₅₀ (poly(ethylene glycol) methyl ether acrylate, mw=2054)₂₀; (aminolauryl methacrylate)₂₀ (methyl methacrylate)₆₀ (poly(ethylene glycol) methyl ether acrylate, mw=2054)₂₀; (N,N-dimethylaminoethyl acrylate)₄₀ (methyl methacrylate)₄₀ (poly-(ethylene glycol) methyl ether acrylate, mw=218)₂₀; (vinyl acetate)₃₀ (methyl methacrylate)₅₀ (poly(ethylene glycol) methyl ether acrylate, mw=218)₂₀; (vinyl butyl ether)₂₀ (methyl methacrylate)₆₀ (poly(ethylene glycol) methyl ether acrylate, mw=218)₂₀; (hexyl acrylate)₄₀ (styrene)₄₀ (poly(ethylene glycol) methyl ether acrylate, mw=404)₂₀; (hexyl acrytate)₃₀ (dimethyl styrene)₅₀ (poly(ethylene glycol) methyl ether acrylate, mw=404)₂₀; (hexyl acrylate)₂₀ (trifluoromethyl styrene)₆₀ (poly(ethylene glycol) methyl ether acrylate, mw=404)₂₀; (hexyl acrylate)₄₀ (tetrafluoropropyl methacrylate)₄₀ (poly(ethylene glycol) methyl ether acrylate, mw=2054)₂₀; (hexyl acrylate)₃₀ (glycidyl methacrylate)₅₀ (poly(ethylene glycol) methyl ether acrylate, mw=2054)₂₀; (hexyl acrylate)₂₀ (glycidyl acrylate)₆₀ (poly(ethylene glycol) methyl ether acrylate, mw=2054)₂₀; (hexyl acrylate)₄₀ (maleimide)₄₀ (poly(ethylene glycol) methyl ether acrylate, mw=218)₂₀; (hexyl acrylate)₅₀ (n-hexyl maleimide)₃₀ (poly(ethylene glycol) methyl ether acrylate, mw=218)₂₀; (hexyl acrylate)₄₀ (n-vinyl maleimide)₄₀ (poly(ethylene glycol) methyl ether acrylate, mw=218)₂₀; (hexyl acrylate)₄₀ (methyl methacrylate)₃₀(d1)₁₀ (poly(ethylene glycol) methyl ether acrylate, mw=404)₂₀; (hexyl acrylate)₄₀ (methyl methacrylate)₃₀(d1)₁₀ (poly(ethylene glycol) methyl ether acrylate, mw=404)₂₀; (hexyl acrylate)₄₀ (methyl methacrylate)₃₀(d1)₁₀ (poly(ethylene glycol) methyl ether acrylate, mw=404)₂₀; (hexyl acrylate)₄₀ (methyl methacrylate)₃₀(d1)₁₀ (poly(ethylene glycol) methyl ether acrylate, mw=404)₂₀; (hexyl acrylate)₄₀ (methyl methacrylate)₃₀(d4)₁₀ (poly(ethylene glycol) methyl ether acrylate, mw=404)₂₀; (hexyl acrylate)₄₀ (methyl methacrylate)₃₀(d4)₁₀ (poly(ethylene glycol) methyl ether acrylate, mw=404)₂₀; (hexyl acrylate)₄₀ (styrene)₃₀(d1)₁₀ (poly(ethylene glycol) methyl ether acrylate, mw=404)₂₀; (hexyl acrylate)₅₀ (methyl methacrylate)₄₅ (poly(ethylene glycol) methyl ether acrylate, mw=1404)₅; (hexyl acrylate)₅₀ (methyl methacrylate)₄₀ (poly(ethylene glycol) methyl ether acrylate, mw=404)₁₀; and (hexyl acrylate)₅₀ (methyl methacrylate)₃₅ (poly(ethylene glycol) methyl ether acrylate, mw=404)₁₅;
where d1 and d4 are UV absorber moieties formed by copolymerising monomers of formula 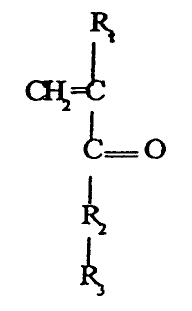 where R₁ = H, R₂ = O, and R₃ are 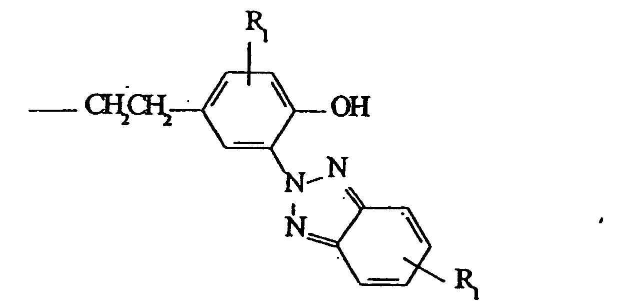 and 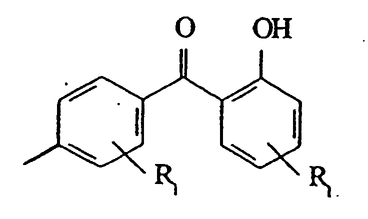 respectively.

## Patentansprüche

1. Ein haltbares, filmbildendes, wasserdispersives Polymer, das einen hydrophoben Anteil und einen hydrophilen Anteil aufweist, zum Dispergieren von wasserunlöslichen Molekülen oder Partikeln in Wasser, wobei das Polymer aus der Gruppe ausgewählt ist, die aus folgendem besteht:
(Hexylacrylat)₄₀ (Methylmethacrylat)₄₀ (Poly(ethylenglycol)methyletheracrylat, rM (relative Molekülmasse) = 404)₂₀; (Hexylacrylat)₃₀ (Methylmethacrylat)₅₀ (Poly(ethylenglycol)methyletheracrylat, rM = 404)₂₀; (Hexylacrylat)₂₀ (Methylmethacrylat)₆₀ (Poly(ethylenglycol)methyletheracrylat, rM = 409)₂₀; (Hexylacrylat)₄₀ (Methylmethacrylat)₄₀ (Poly(ethylenglycol)methyletheracrylat, rM = 2.054)₂₀; (Hexylacrylat)₃₀ (Methylmethacrylat)₅₀ (Poly(ethylenglycol)methyletheracrylat, rM = 2.054)₂₀; (Hexylacrylat)₂₀ (Methylmethacrylat)₆₀ (Poly(ethylenglycol)methyletheracrylat, rM = 2.054)₂₀; (Hexylacrylat)₄₀ (Methylmethacrylat)₄₀ (Poly(ethylenglycol)methyletheracrylat, rM = 218)₂₀; (Hexylacrylat)₃₀ (Methylmethacrylat)₅₀ (Poly(ethylenglycol)methyletheracrylat, rM = 218)₂₀; (Hexylacrylat)₂₀ (Methylmethacrylat)₆₀ (Poly(ethylenglycol)methyletheracrylat, rM = 218)₂₀; (Ethylacrylat)₄₀ (Methylmethacrylat)₄₀ (Poly(ethylenglycol)methyletheracrylat, rM = 404)₂₀; (Propylacrylat)₄₀ (Methylmethacrylat)₄₀ (Poly(ethylenglycol)methyletheracrylat, rM = 404)₂₀; (Butylacrylat)₄₀ . (Methylmethacrylat)₄₀ (Poly(ethylenglycol)methyletheracrylat, rM = 404)₂₀; (Octadecylacrylat)₄₀ (Methylmethacrylat)₄₀ (Poly(ethylenglycol)methyletheracrylat, rM = 404)₂₀; (Laurylmethacrylat)₄₀ (Methylmethacrylat)₄₀ (Poly(ethylenglycol)methyletheracrylat, rM = 404)₂₀; (Octadecylmethacrylat)₄₀ (Methylmethacrylat)₄₀ (Poly(ethylenglycol)methyletheracrylat, rM = 404)₂₀; (Hydroxyoctadecylacrylat)₄₀ (Methylmethacrylat)₄₀ (Poly(ethylenglycol)methyletheracrylat, rM = 404)₂₀; (Hydroxyethylacrylat)₄₀ (Methylmethacrylat)₄₀ (Poly(ethylenglycol)methyletheracrylat, rM = 404)₂₀; (Hydroxylaurylmethacrylat)₄₀ (Methylmethacrylat)₄₀ (Poly(ethylenglycol)methyletheracrylat, rM = 404)₂₀; (Phenethylacrylat)₄₀ (Methylmethacrylat)₄₀ (Poly(ethylenglycol)methyletheracrylat, rM = 404)₂₀; (6-Phenylhexylacrylat)₄₀ (Methylmethacrylat)₄₀ (Poly(ethylenglycol)methyletheracrylat, rM = 404)₂₀; (Cyclohexylacrylat)₄₀ (Methylmethacrylat)₄₀ (Poly(ethylenglycol)methyletheracrylat, rM = 404)₂₀; (Acryloxypropylmethyldimethoxysilan)₃₀ (Methylmethacrylat)₅₀ (Poly(ethylenglycol)methyletheracrylat, rM = 404)₂₀; (N,N-Dihexylacrylamid)₂₀ (Methylmethacrylat)₆₀ (Poly(ethylenglycol)methyletheracrylat, rM = 404)₂₀; (Aminopropylacrylat)₄₀ (Methylmethacrylat)₄₀ (Poly(ethylenglycol)methyletheracrylat, rM = 2.054)₂₀; (Aminohexylacrylat)₃₀ (Methylmethacrylat)₅₀ (Poly(ethylenglycol)methyletheracrylat, rM = 2.054)₂₀; (Aminolaurylmethacrylat)₂₀ (Methylmethacrylat)₆₀ (Poly(ethylenglycol)methyletheracrylat, rM = 2.054)₂₀; (N,N-Dimethylaminoethylacrylat)₄₀ (Methylmethacrylat)₄₀ (Poly(ethylenglycol)methyletheracrylat, rM = 218)₂₀; (Vinylacetat)₃₀ (Methylmethacrylat)₅₀ (Poly(ethylenglycol)methyletheracrylat, rM = 218)₂₀; (Vinylbutylether)₂₀ (Methylmethacrylat)₆₀ (Poly(ethylenglycol)methyletheracrylat, rM = 218)₂₀; (Hexylacrylat)₄₀ (Styren)₄₀ (Poly(ethylenglycol)methyletheracrylat, rM = 404)₂₀; (Hexylacrylat)₃₀ . (Dimethylstyren)₅₀ (Poly(ethylenglycol)methyletheracrylat, rM = 404)₂₀; (Hexylacrylat)₂₀ (Trifluoromethylstyren)₆₀ (Poly(ethylenglycol)methyletheracrylat, rM = 404)₂₀; (Hexylacrylat)₄₀ (Tetrafluoropropylmethacrylat)₄₀ (Poly(ethylenglycol)methyletheracrylat, rM = 2.054)₂₀; (Hexylacrylat)₃₀ (Glycidylmethacrylat)₅₀ (Poly(ethylenglycol)methyletheracrylat, rM = 2.054)₂₀; (Hexylacrylat)₂₀ (Glycidylacrylat)₆₀ (Poly(ethylenglycol)methyletheracrylat, rM = 2.054)₂₀; (Hexylacrylat)₄₀ (Maleimid)₄₀ (Poly(ethylenglycol)methyletheracrylat, rM = 218)₂₀; (Hexylacrylat)₅₀ (n-Hexylmaleimid)₃₀ (Poly(ethylenglycol)methyletheracrylat, rM = 218)₂₀; (Hexylacrylat)₄₀ (n-Vinylmaleimid)₄₀ (Poly(ethylenglycol)methyletheracrylat, rM = 218)₂₀; (Hexylacrylat)₉₀ (Methylmethacrylat)₃₀(d1)₁₀ (Poly(ethylenglycol)methyletheracrylat, rM = 404)₂₀; (Hexylacrylat)₄₀ (Methylmethacrylat)₃₀(d1)₁₀ (Poly(ethylenglycol)methyletheracrylat, rM = 404)₂₀; (Hexylacrylat)₄₀ (Methylmethacrylat)₃₀(d1)₁₀ (Poly(ethylenglycol)methyletheracrylat, rM = 404)₂₀; (Hexylacrylat)₄₀ (Methylmethacrylat)₃₀(d1)₁₀ (Poly(ethylenglycol)methyletheracrylat, rM = 404)₂₀; (Hexylacrylat)₄₀ (Methylmethacrylat)₃₀(d4)₁₀ (Poly(ethylenglycol)methyletheracrylat, rM = 404)₂₀; (Hexylacrylat)₄₀ (Methylmethacrylat)₃₀(d4)₁₀ (Poly(ethylenglycol)methyletheracrylat, rM = 404)₂₀; (Hexylacrylat)₄₀ (Styren)₃₀(d1)₁₀ (Poly(ethylenglycol)methyletheracrylat, rM = 404)₂₀; (Hexylacrylat)₅₀ (Methylmethacrylat)45 (Poly(ethylenglycol)methyletheracrylat, rM = 404)₅; (Hexylacrylat)₅₀ (Methylmethacrylat)₄₀ (Poly(ethylenglycol)methyletheracrylat, rM = 404)₁₀; und (Hexylacrylat)₅₀ (Methylmethacrylat)35 (Poly(ethylenglycol)methyletheracrylat, rM = 404)₁₅;
wobei d1 und d4 UV-Absorber-Anteile sind, die durch Copolymerisieren von Monomeren der Formel 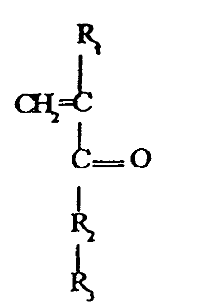 gebildet werden, wobei R₁ = H, R₂ = O und R₃ 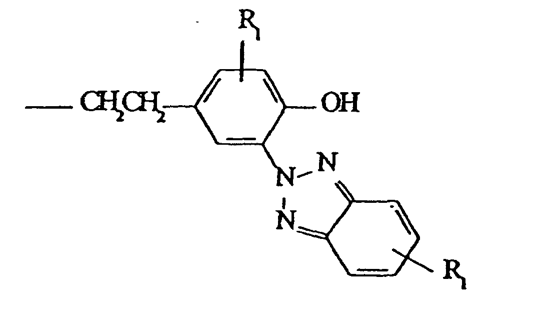 bzw. 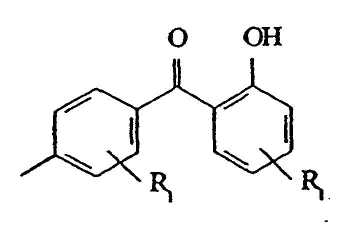 sind.

## Revendications

1. Polymère durable filmogène dispersible dans l'eau ayant une partie hydrophobe et une partie hydrophile pour disperser dans l'eau les molécules ou les particules insolubles dans l'eau, ledit polymère étant choisi parmi le groupe
composé de (acrylate d'héxyle)₄₀ (méthacrylate méthylique)₄₀ (acrylate méthylique d'éther de poly(éthylène glycol), pm=404)_{20 ;} (acrylate d'héxyle)₃₀ (méthacrylate méthylique) ₅₀ (acrylate méthylique d'éther de poly(éthylène glycol), pm=404)_{20 ;} (acrylate d'héxyle)₂₀ (méthacrylate méthylique)₆₀ (acrylate méthylique d'éther de poly(éthylène glycol), pm=404)_{20 ;} (acrylate d'héxyle)₄₀ (méthacrylate méthylique)₄₀ (acrylate méthylique d'éther de poly(éthylène glycol), pm=2054)_{20 ;} (acrylate d'héxyle)₃₀ (méthacrylate méthylique)₅₀ (acrylate méthylique d'éther de poly(éthylène glycol), pm=2054)_{20 ;} (acrylate d'héxyle)₂₀ (méthacrylate méthylique)₆₀ (acrylate méthylique d'éther de poly(éthylène glycol), pm=2054)_{20 ;} (acrylate d'héxyle)₄₀ (méthacrylate méthylique)₄₀ (acrylate méthylique d'éther de poly(éthylène glycol), pm=218)_{20 ;} (acrylate d'héxyle)₃₀ (méthacrylate méthylique) ₅₀ (acrylate méthylique d'éther de poly(éthylène glycol), pm=218)_{20 ;} (acrylate d'héxyle)₂₀ (méthacrylate méthylique)₆₀ (acrylate méthylique d'éther de poly(éthylène glycol), pm=218)_{20 ;} (acrylate d'héxyle)₄₀ (méthacrylate méthylique)₄₀ (acrylate méthylique d'éther de poly(éthylène glycol), pm=404)_{20 ;} (acrylate de propyle)₄₀ (méthacrylate méthylique)₄₀ (acrylate méthylique d'éther de poly(éthylène glycol), pm=404)_{20 ;} (acrylate de butyle)₄₀ (méthacrylate méthylique)₄₀ (acrylate méthylique d'éther de poly(éthylène glycol), pm=404)_{20 ;} (acrylate d'octadécyle)₄₀ (méthacrylate méthylique)₄₀ (acrylate méthylique d'éther de poly(éthylène glycol), pm=404)_{20 ;} (méthacrylate laurique)₄₀ (méthacrylate méthylique)₄₀ (acrylate méthylique d'éther de poly(éthylène glycol), pm=404)_{20 ;} (méthacrylate d'octadécyle)₄₀ (méthacrylate méthylique)₄₀ (acrylate méthylique d'éther de poly(éthylène glycol), pm=404)_{20 ;} (acrylate d'hydroxyoctadécyle)₄₀ (méthacrylate méthylique)₄₀ (acrylate méthylique d'éther de poly(éthylène glycol), pm=404)_{20 ;} (acrylate d'hydroxyéthyle)₄₀ (méthacrylate méthylique)₄₀ (acrylate méthylique d'éther de poly(éthylène glycol), pm=404)_{20 ;} (méthacrylate hydroxy-laurique)₄₀ (méthacrylate méthylique)₄₀ (acrylate méthylique d'éther de poly(éthylène glycol), pm=404)_{20 ;} (acrylate phenéthylique)₄₀ (méthacrylate méthylique)₄₀ (acrylate méthylique d'éther de poly(éthylène glycol), pm=404)_{20 ;} (acrylate phényle héxyle-6)₄₀ (méthacrylate méthylique)₄₀ (acrylate méthylique d'éther de poly(éthylène glycol), pm=404)_{20 ;} (acrylate de cyclohéxyle)₄₀ (méthacrylate méthylique)₄₀ (acrylate méthylique d'éther de poly(éthylène glycol), pm=404)_{20 ;} (acryloxypropylméthyldiméthoxysilane)₃₀ (méthacrylate méthylique)₅₀ (acrylate méthylique d'éther de poly(éthylène glycol), pm=404)_{20 ;} (acrylamide de N,N-dihéxyle)₂₀ (méthacrylate méthylique)₆₀ (acrylate méthylique d'éther de poly(éthylène glycol), pm=404)_{20 ;} (acrylate aminopropyle)₄₀ (méthacrylate méthylique)₄₀ (acrylate méthylique d'éther de poly(éthylène glycol), pm=2054)_{20 ;} (acrylate d'aminohéxyle)₃₀ (méthacrylate méthylique)₅₀ (acrylate méthylique d'éther de poly(éthylène glycol), pm=2054)_{20 ;} (méthacrylate de laurylamine)₂₀ (méthacrylate méthylique)₆₀ (acrylate méthylique d'éther de poly(éthylène glycol), pm=2054)_{20 ;} (acrylate de N,N-diméthylaminoéthyle)₄₀ (méthacrylate méthylique)₄₀ (acrylate méthylique d'éther de poly(éthylène glycol), pm=218)_{20 ;} (acétate de vinyle)₃₀ (méthacrylate méthylique) ₅₀ (acrylate méthylique d'éther de poly(éthylène glycol), pm=218)_{20 ;} (éther de butyle de vinyle)₂₀ (méthacrylate méthylique)₆₀ (acrylate méthylique d'éther de poly(éthylène glycol), pm=218)_{20 ;} (acrylate d'héxyle)₄₀ (styrène)₄₀ (acrylate méthylique d'éther de poly(éthylène glycol), pm=404)_{20 ;} (acrylate d'héxyle)₃₀ (styrène de diméthyle)₅₀ (acrylate méthylique d'éther de poly(éthylène glycol), pm=404)_{20 ;} (acrylate d'héxyle)₂₀ (styrène de trifluorométhyle)₆₀ (acrylate méthylique d'éther de poly(éthylène glycol), pm=404)_{20 ;} (acrylate d'héxyle)₄₀ (méthacrylate de tétrafluoropropyle)₄₀ (acrylate méthylique d'éther de poly (éthylène glycol), pm=2054)_{20 ;} (acrylate d'héxyle)₃₀ (méthacrylate de glycidyle)₅₀ (acrylate méthylique d'éther de poly(éthylène glycol), pm=2054)_{20 ;} (acrylate d'héxyle)₂₀ (acrylate de glycidyle)₆₀ (acrylate méthylique d'éther de poly(éthylène glycol), pm=2054)_{20 ;} (acrylate d'héxyle)₄₀ (maléimide)₄₀ (acrylate méthylique d'éther de poly(éthylène glycol), pm=218)_{20 ;} (acrylate d'héxyle)₅₀ (maléimide n-héxyle)₃₀ (acrylate méthylique d'éther de poly(éthylène glycol), pm=218)_{20 ;} (acrylate d'héxyle)₄₀ (maléimide n-vinyle)₄₀ (acrylate méthylique d'éther de poly(éthylène glycol), pm=218)_{20 ;} (acrylate d'héxyle)₄₀ (méthacrylate méthylique)₃₀(d1)₁₀ (acrylate méthylique d'éther de poly(éthylène glycol), pm=404)_{20 ;} (acrylate d'héxyle)₄₀ (méthacrylate méthylique)₃₀(d1)₁₀ (acrylate méthylique d'éther de poly(éthylène glycol), pm=404)_{20 ;} (acrylate d'héxyle)₄₀ (méthacrylate méthylique)₃₀(d1)₁₀ (acrylate méthylique d'éther de poly(éthylène glycol), pm=404)_{20 ;} (acrylate d'héxyle)₄₀ (méthacrylate méthylique)₃₀(d1)₁₀ (acrylate méthylique d'éther de poly(éthylène glycol), pm=404)_{20 ;} (acrylate d'héxyle)₄₀ (méthacrylate méthylique)₃₀(d4)₁₀ (acrylate méthylique d'éther de poly(éthylène glycol), pm=404)_{20 ;} (acrylate d'héxyle)₄₀ (méthacrylate méthylique)₃₀(d4)₁₀ (acrylate méthylique d'éther de poly(éthylène glycol), pm=404)_{20 ;} (acrylate d'héxyle) ₄₀ (styrène)₃₀(d1)₁₀ (acrylate méthylique d'éther de poly(éthylène glycol), pm=404)_{20 ;} (acrylate d'héxyle)₅₀ (méthacrylate méthylique)₄₅ (acrylate méthylique d'éther de poly(éthylène glycol), pm=404)_{5 ;} (acrylate d'héxyle)₅₀ (méthacrylate méthylique)₄₀ (acrylate méthylique d'éther de poly(éthylène glycol), pm=404)_{10 ;} et (acrylate d'héxyle)₅₀ (méthacrylate méthylique)₃₅ (acrylate méthylique d'éther de poly(éthylène glycol), pm=404)_{15 ;}
où D1 et D4 sont des fractions absorbantes d'UV constituées par copolymérisation de monomères de formule 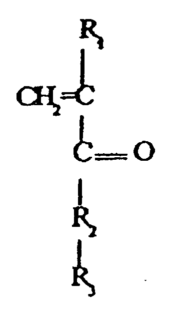 où R₁ = H, R₂ = O et R₃ sont 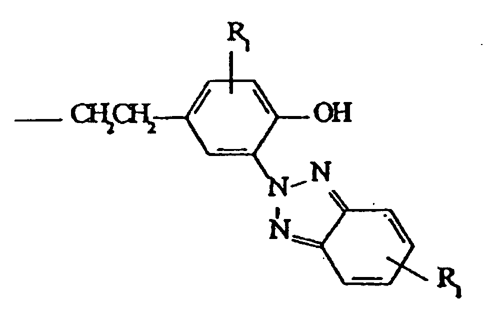 et 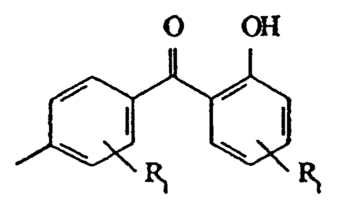 respectivement.
